Europäisches Patentamt

European Patent Office

Office européen des brevets

(11) Publication number: **0 269 373**
**A2**

# EUROPEAN PATENT APPLICATION

(21) Application number: 87310243.8

(51) Int. Cl.⁴: **B25J 9/18**

(22) Date of filing: 19.11.87

(30) Priority: 20.11.86 US 932842
20.11.86 US 932973

(43) Date of publication of application:
01.06.88 Bulletin 88/22

(84) Designated Contracting States:
DE FR GB IT SE

(71) Applicant: UNIMATION INC.
Shelter Rock Lane
Danbury Connecticut 06810(US)

(72) Inventor: Onaga, Eimei Ming
10 Ox Drive
Brookfield Center CT 60805(US)
Inventor: Casler, Richard J., Jr.
32 Maltbie Road
Newton CT 06470(US)

(74) Representative: van Berlyn, Ronald Gilbert
23, Centre Heights
London, NW3 6JG(GB)

(54) **Multiaxis robot control having protection system with energy and backup velocity monitoring.**

(57) A digital robot control includes a position/velocity microprocessor control and a torque microprocessor control for each of multiple robot axes. Digital position, velocity and motor current feedback signals are generated from motor sensor signals for use in making microprocessor control calculations. Another motor sensor generates an overlimit signal when motor temperature rises above a limit value to indicate excessive motor current. The torque microprocessor makes a backup motor energy calculation from the feedback motor current signal from each joint motor and compares the result to a stored motor energy limit. A backup velocity determination is made for each joint motor by the torque microprocessor from the motor current feedback, the motor command terminal voltage and the motor resistance and inductance. The robot is shut down if the temperature or motor energy limit is exceeded or if the difference between the feedback and backup velocity values exceeds a predetermined limit.

EP 0 269 373 A2

# MULTIAXIS ROBOT CONTROL HAVING IMPROVED PROTECTION SYSTEM WITH ENERGY AND BACKUP VELOCITY MONITORING

## BACKGROUND OF THE INVENTION

The present invention relates to robots and more particularly to robot controls and energy and velocity monitoring and protection systems for such controls.

The arm of an industrial robot is provided with a plurality of joints that are interconnected by links. Each joint is driven by a motor under the direction of the robot control. The robot tool tip is moved over commanded paths and/or to commanded positions through coordinated movement of the joints.

Robot controls normally have a control loop configuration that includes a velocity control for each joint motor. The velocity control loop employs joint motor velocity feedback typically generated by a tachometer or derived from position encoder output signals.

The operation of the robot arm is thus highly dependent on the validity of the velocity feedback. If the tachometer or encoder becomes defective or if velocity feedback otherwise becomes erroneous or lost, robot arm control is essentially lost and resultant arm motion could result in personnel injury or property damage.

For safety and property protection reasons, it is thus desirable to provide a backup mechanism for monitoring the velocity feedback system in a robot control and providing protective action in the event a failure is detected.

In the operation of robots, any of a variety of conditions may cause one or more of the robot joint motors to become overloaded. When an overload occurs, it is desirable for personnel safety and property protection reasons to shut down the robot. Overload may occur, for example, as a result of a robot program error, a collision of the robot arm with an obstacle, a defect in a joint motor, etc.

Conventionally, motor monitoring systems operate from temperature sensors to determine when motor overload occurs and protective action needs to be initiated. Overload, i.e. excessive energization of a joint motor or drive electronics, is presumed to exist when motor overheating exists.

While the traditional motor monitoring systems provide a first level of motor overload protection, they do operate with some shortcomings. For example, there is some time delay between the time at which an overload condition arises and the temperature sensor based system responds to alarm the overload. Further, the system functions with limited accuracy in detecting the overload threshold. Finally, there is typically no backup monitoring means in the event of failure of the sensor system for any of the joint motors.

Accordingly, it is desirable that all joint motors in a robot be provided with backup monitoring protection coordinately with the primary temperature sensor based protection and that such backup protection provide fast and accurate energy monitoring.

The present invention is directed to a robot control having a protection system that provides fast and accurate backup energy monitoring and backup velocity monitoring.

## SUMMARY OF THE INVENTION

A digital control is provided for a robot having a plurality of arm joints. An electric motor drives each of the robot arm joints and a power amplifier operates to supply drive current to each motor.

Each joint motor has digital feedback control loop means operable at a predetermined sampling rate and including digital position and velocity control loops driving a digital torque control loop in accordance with digital position commands to generate digital motor voltage commands for controlling the associated power amplifier.

Means are provided for sensing the motion of each joint motor and for generating corresponding digital position and velocity feedback signals for control calculations in the position and velocity control loops.

In the feedback system, means are provided for generating digital signals representative of the respective joint motor drive currents for control calculations in the torque control loop. Means are also provided for sensing motor temperature and for generating an overtemperature signal when a predetermined motor temperature is exceeded indicating excessive motor current flow.

Backup energy monitoring means independently determine the energy applied to each joint motor from the motor current. The backup calculated energy for each joint motor is compared to a predetermined energy limit for that motor and an overlimit signal is generated when that limit is exceeded. The robot motor is deenergized when the overtemperature or overlimit signal is generated.

Further, backup velocity monitoring means independently determines the velocity of each joint motor from the motor current and terminal voltage and the motor inductance and resistance. Comparisons are made between the primary and backup velocity signals for each joint motor.


## BRIEF DESCRIPTION OF THE DRAWINGS

Figure 1 shows a perspective view of a robot which is operated with more advanced and more accurate performance when controlled by a system making use of the invention;

Figure 2 shows a generalized block diagram of a control loop arrangement employing position, velocity and torque control loops in which the invention may be embodied;

Figure 3 shows a more detailed block diagram of a control loop arrangement employing position, velocity and torque control loops in which the invention preferably is embodied;

Figure 4 shows an overview of an arrangement of electronic boards on which circuitry is arranged to implement the robot control and its energy monitoring system in accordance with the present invention;

Figure 5A shows a block diagram of a robot protection system that embodies a joint motor energy monitor in accordance with the invention;

Figure 5B shows a block diagram of a robot protection system that embodies a backup velocity monitor in accordance with the invention;

Figure 6A shows a logic diagram indicating the manner in which the energy monitor and protection system operates;

Figure 6B shows a flow chart that represents the programmed operation of the velocity monitor and protection system;

Figures 7A1-2, 8A1-2 and 9 show respective block diagrams of servo control, torque processor board and arm interface boards employed in implementing the invention;

Figures 7B-7E show flow charts for servo control board programming;

Figure 10 shows a block diagram of a PWM circuit used on the AIF board to generate joint motor control signals; and

Figures 10A, 10B and 11 show bridge circuit configuration for DC brushless and brush type joint motor windings.


## DESCRIPTION OF THE PREFERRED EMBODIMENT ROBOTS - GENERALLY

Robot capabilities generally range from simple repetitive point-to-point motions to complex motions that are computer controlled and sequenced as part of an integrated manufacturing system. In factory applications, robots can perform a wide variety of tasks in various manufacturing applications including: die casting, spot welding, arc welding, investment casting, forging, press working, spray painting, plastic molding, machine tool loading, heat treatment, metal deburring, palletizing, brick manufacturing, glass manufacturing, etc.

To perform work within its sphere of influence, a robot typically is provided with an arm, a wrist subassembly and an end effector. The coordinate system employed for the robot arm typically is Cartesian, cylindrical, polar or revolute. Generally, three motion axes are employed to deliver the wrist subassembly anywhere within the sphere of influence and three additional motion axes are employed for universal orientation of the end effector. A drive system is used for each motion axis, and it may be electrical, hydraulic or pneumatic.


## PUMA ROBOT

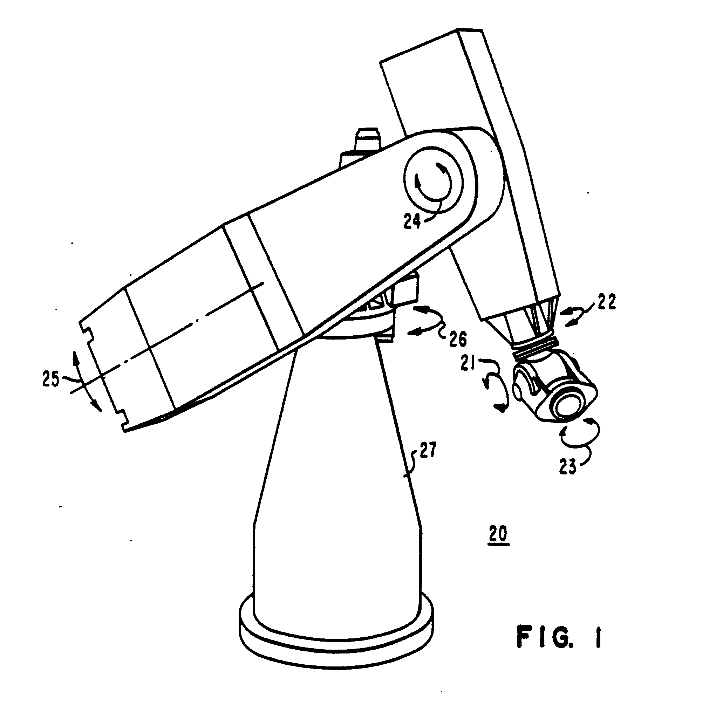

More particularly, there is shown in Figure 1 a six-axis industrial electric robot 20 which is illustrative of a wide variety of robots that can be operated in accordance with the principles of the invention. The robot 20 is a relatively powerful electric robot sold by Unimation Company, a wholly-owned company of the present assignee, under the trade name UNIMATE PUMA SERIES 700. The Model 761 PUMA has a 22 pound payload capacity and a reach of 59.1 inches. The Model 762 PUMA has a 44 pound payload capacity and a reach of 49.2 inches.

PUMA 700 Series robots are designed with flexibility and durability to ensure long life and optimum performance in even the harshest, most demanding manufacturing environments. Specific customer needs for either higher payload or extended reach determine which model is suitable for a particular task.

With its longer reach, the PUMA 761 is ideally suited for precise, repetitive tasks such as arc welding and sealant dispensing. The PUMA 762 performs high-precision material handling, machine loading, inspection, testing, joining and assembly in medium and heavier weight applications. The PUMA robots occupy minimal floor space, yet a large work envelope allows the robots to service multiple machines and work surfaces.

Each axis motion is generated by a brush type DC electric motor, with axis position feedback generated by incremental encoders. As shown, the wrist is provided with three articulations, i.e., an up/down rotation indicated by arrow 21 and a left/right rotation indicated by arrow 22 and a third motion indicated by arrow 23. Elbow and shoulder rotations in the up/down direction are respectively indicated by arrows 24 and 25. Finally, a left/right arm rotation on a base 27 is indicated by arrow 26.

## ROBOT CONTROL

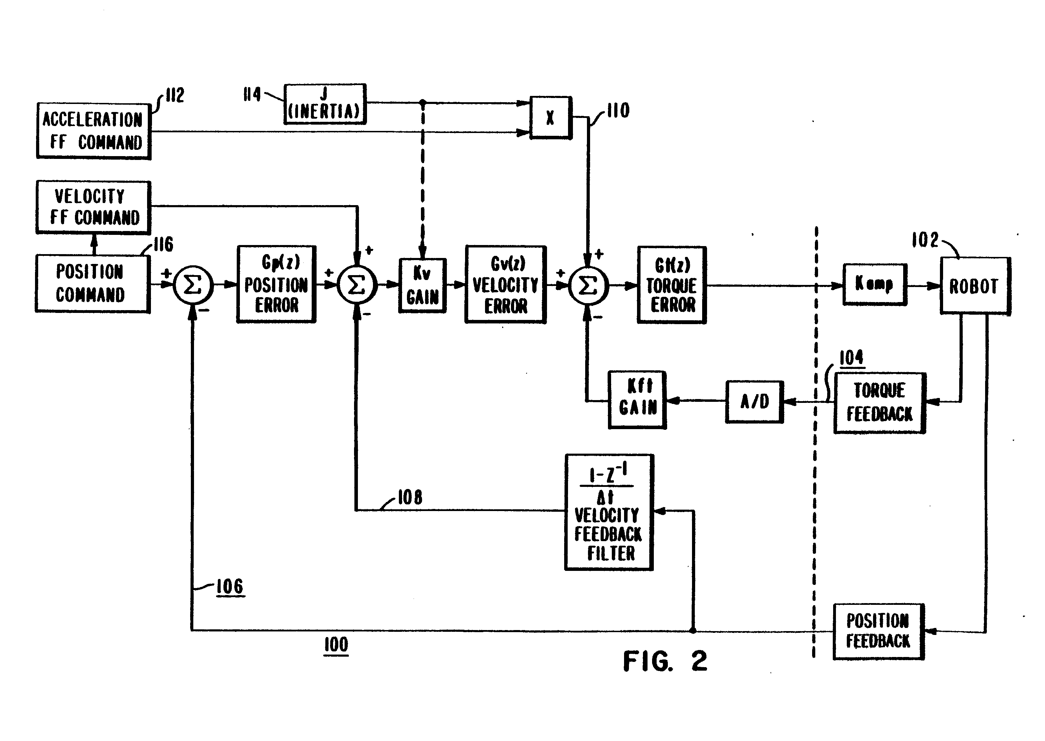

The present invention is directed to a robot control 30 (Figure 2) which can operate the robot 20 of Figure 1 and other Unimation robots including the larger 860 robot which employs brushless DC axis motors and absolute position feedback. Generally, however, the robot control 30 is universally and flexibly applicable to differing kinds and sizes of robots in stand alone or robotic network operation.

As a result of its universality, the UNIVAL control 30 can be arranged to operate a complete family of robots. Thus, all hydraulically and electrically driven robot arms manufactured by Unimation, a company of Westinghouse, assignee of the present invention, can be operated by the UNIVAL control 30. The key to the family usage, or more generally the universality of UNIVAL lies in modularization and in minimizing the use of arm dependent hardware and avoiding the use of any arm dependent hardware in as much of the modular control structure as possible. The robot control 30 is identified by the acronym UNIVAL and operates with completely digital servo control to provide better robot performance with lower cost.

## CONTROL LOOPS

In Figure 2, there is shown an embodiment of a generalized control loop configuration 100 employable in the UNIVAL robot control. Thus, each robot arm joint motor 102 is operated by a torque control loop 104. An outer position control loop 106 is tandem connected to a velocity control loop 108 which in turn drives the torque control loop 104. A feedforward acceleration control loop 110 is responsive to acceleration command 112 and arm and load inertia 114 is also directly coupled to the input of the torque control loop 104. The robot arm is operated by the control loop 100 in accordance with a robot program through a stream of program position commands 116 applied to the position control loop.

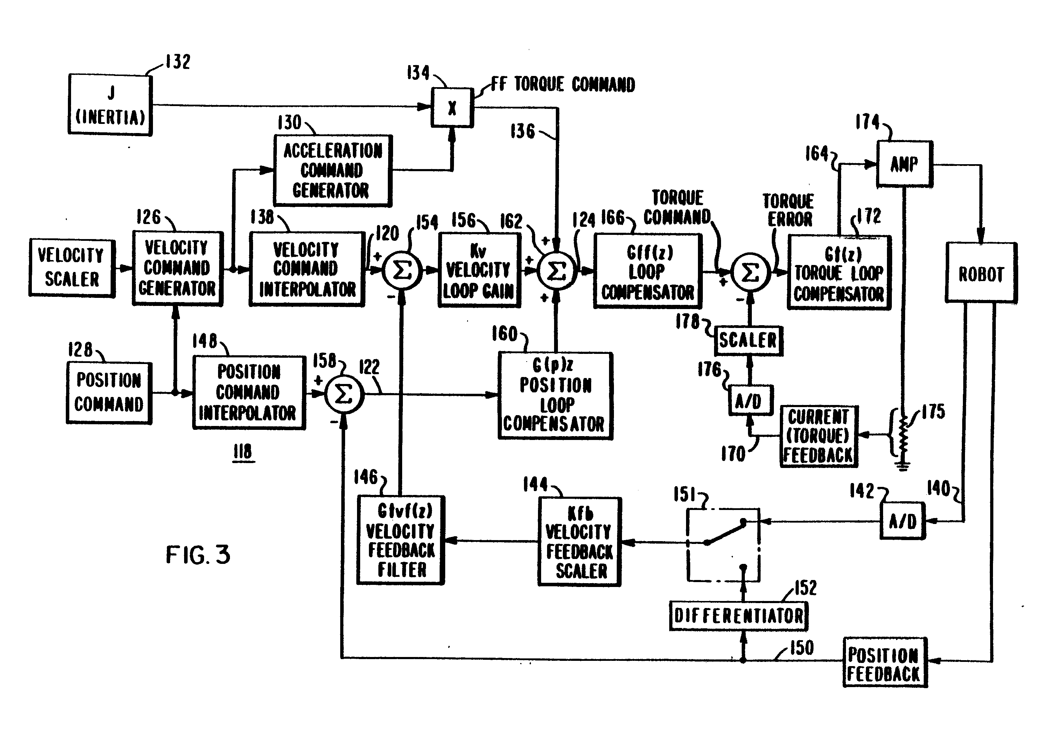

Figure 3 shows the preferred generalized control loop configuration 118 presently employed in the UNIVAL robot control. It is preferably implemented as a completely digital control. With the provision of hierarchical architecture and multiprocessor architecture and floating point hardware as described herein or in other patent applications referenced above, the trajectory cycle can be characterized with a cycle time in the range of 32 to 8 milliseconds depending on the employed modular configuration.

In the preferred control loop arrangement 118, position and velocity control loops 120 and 122 are parallel fed to the input of a torque control loop 124. Velocity commands are generated by block 126 from position commands received by block 128. In turn, feedforward acceleration commands are generated by block 130 from the velocity commands. Computed inertia (load and arm) 132 is multiplied against the acceleration command as indicated by reference character 134 in the feedforward acceleration control loop 136.

In the velocity loop 120, the velocity command in the present embodiment is generated once every 8 to 32 milliseconds depending on the modular configuration of the robot control. The basic robot control described subsequently herein has a trajectory cycle time of 32 milliseconds while the enhanced contact has a trajectory cycle of 8 milliseconds.

In any case, a velocity command generator 138 interpolates velocity commands at the rate of 1 each millisecond which corresponds with the velocity feedback sampling rate in velocity feedback path 140. As shown, velocity feedback for a Unimation 860 robot is produced by tachometer signals which are converted from analog to digital by converter 142. A scaler 144 and a filter 146 round out the velocity feedback circuitry.

Similarly, in the position control loop 122, an interpolator 148 generates position commands every millisecond in correspondence with the position feedback sampling rate in feedback path 150. In the Unimation 860 robot control, position feedback is absolute and the velocity and position feedback paths 140 and 150 operate as just described (with switch 151 as shown). For Unimation PUMA robots, tachometers are not available and velocity feedback is computed from incremental position feedback as indicated by block 152 (with the switch 151 swinging to its other position).

Velocity error is generated by summer 154 with gain applied by loop 156. Similarly, position error is generated by summer 158 with gain applied by box 160.

Velocity and position errors and feedforward acceleration command are summed in summer 162. Gain is applied to box 166 to generate a torque command which is applied to the input of torque control loop 164 every millisecond. Torque error is generated in summer 168 by summing the torque command (motor current command) with current feedback from feedback path 170. Box 172 applies a torque loop gain to the torque error and output commands (motor voltage commands) are applied to a power amplifier 174 which supplies the motor drive current for robot joint operation. Current feedback from resistor 175 is generated every 250 microseconds and converted to digital signals by box 176 with scaling applied by box 178.

## OVERVIEW - ELECTRONIC BOARDS

Implementation of the control looping for the robot control 30 is achieved by the use of digital control circuitry disposed on a plurality of electronic boards. The organization of the circuitry on the boards and the partitioning of programming among various microprocessors 1) enables advanced robot control performance to be achieved with a modular control configuration characterized with economy of manufacture and 2) facilitates variability of configuration which enables universality of use and flexibility in choice of level of control performance.

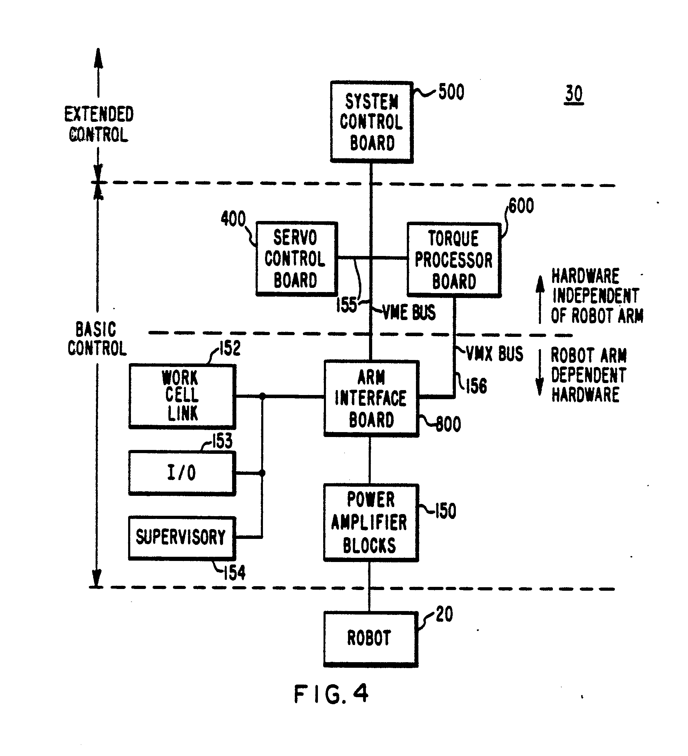

As shown in Figure 4, the control board configuration includes an arm interface board 800 which preferably houses all circuitry dependent on the type of robot arm being controlled. For example, position feedback circuitry will differ according to whether absolute or incremental position feedback is used by the robot arm to be controlled. Thus, two or possibly more varieties of the arm interface board 800 can be employed to provide digital control systems for any of a variety of different sizes or types of robot arms. Any particular robot arm would require use of the arm interface board which is structured to work with that robot arm.

The arm interface (AIF) board 800 also houses generic circuitry such as VME bus control circuitry which is generally related to two or more boards and not to any one board in particular.

Control signals (pulse width modulated) are generated from the AIF board 800 to control power blocks 150 which supply motor currents to the robot joint motors. The AIF board 800 also operates as a channel for external coupling of the robot control 30 to other robot controls in a work cell as indicated by the reference character 152, to programmable controllers and other input/output devices 153 in an area network and to higher level computers 154 for supervisory control.

A torque processor (TP) board 600 and a servo control board 400 are generic circuit boards used with the AIF board 800 and power amplifier blocks 150 in all robot control systems for all robot types. The three circuit boards 400, 600 and 800 provide complete 6 axis control for a robot arm and thus form a basic control configuration for the UNIVAL family of robot controls as well as other robot controls.

The torque processor board 600 provides motor torque control in response to commands from the servo control board 400. In turn, the servo control board 400 provides arm solutions and position and velocity control in accordance with a robot control program.

Extended control capability and/or system functioning is achieved by interconnecting additional electronic boards or devices to the basic control 400, 600, 800. For example, with the addition of a system control board 500 and partitioning of predetermined program functions including the arm solutions from the servo control board 400 to the system control board 500, the UNIVAL control can operate the robot 20 and other robots with significantly faster control action, i.e., with a trajectory cycle shortened from thirty-two milliseconds to eight milliseconds.

Interboard data communications for control and other purposes occur over multiple signal paths in a VME bus 155. Additionally, a VMX bus 156 is provided for connection between the torque processor board 600 and the AIF board 800.

Multiple pin interconnectors (not shown in Figure 4) are provided on the AIF, TP and SCM boards and any other connectable units to facilitate VME and VMX interboard bus connections modular and board assembly for the robot control 30. Other connectors are provided on the AIF board 800 for external input/output connections.

## PROTECTION SYSTEM MONITORING AND PROTECTING ROBOT AGAINST JOINT MOTOR OVERLOAD

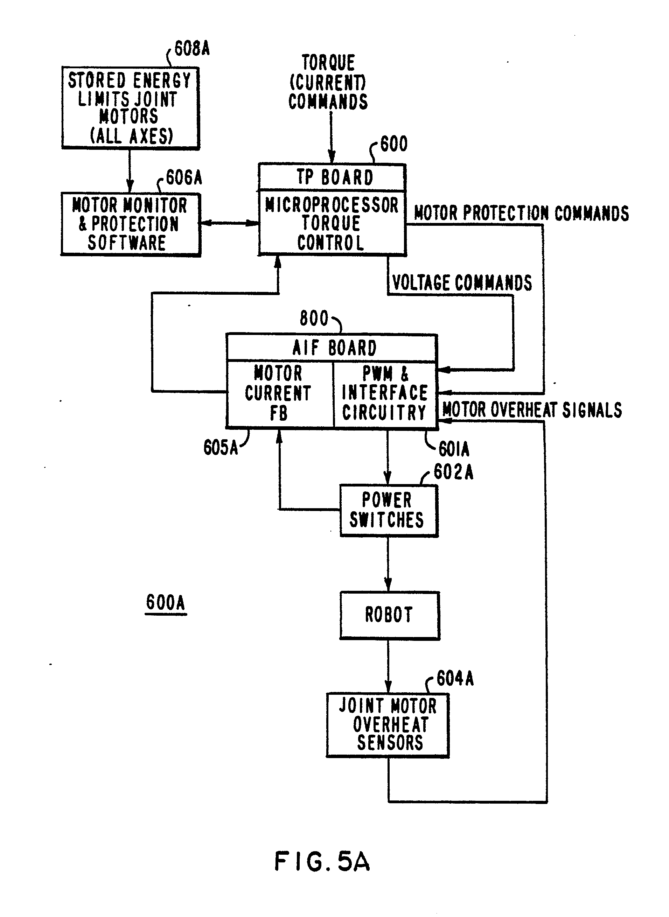

There is included in a protection system for the robot, as shown in Figure 5A a system 600A for monitoring and protecting the robot against joint motor overloading or overheating in accordance with the invention. The torque processor (TP) board 600 provides for each robot axis a torque control loop that responds to motor torque (current) commands to generate voltage commands for a pulse width modulator (PWM) 601A on the arm interface (AIF) board 800.

The PWM generates digital signals for operating power switches 602A that control the application of voltage across the joint motor windings (in this case, either DC brush type or DC brushless type motor windings) for the various robot axes. The resultant energization of the various joint motors normally satisfies the input torque commands which are derived from a higher level robot program.

As already indicated, however, various conditions may cause the actual current(s) flowing through the windings of one or more joint motors to exceed motor energization limits. The robot arm, for example, may encounter an obstacle which causes an overload condition.

When excessive current flows through a joint motor winding, a conventional motor temperature sensor 604A will in a short time become heated to the point where it generates a protection signal that is applied to the AIF board 800 where it is processed to drive the PWM outputs to zero thereby shutting down the robot.

To provide backup protection and/or faster and more accurate sensing of joint motor overheating, motor monitor and protection software 606A is executed in microprocessors on the TP board 600. The monitor software 606A employs actual motor current feedback signals 605A to compute the energy applied to each joint motor over a predetermined computation cycle time period.

The software 606A next compares the computed results with stored motor energization limits 608A. If any limit is exceeded, protection commands are microprocessor generated on the TP board 600 and applied to the PWM on the AIF board 800 to shut down the robot independently of any action that may or may not be about to be taken by one or more of the motor temperature sensors 604A.

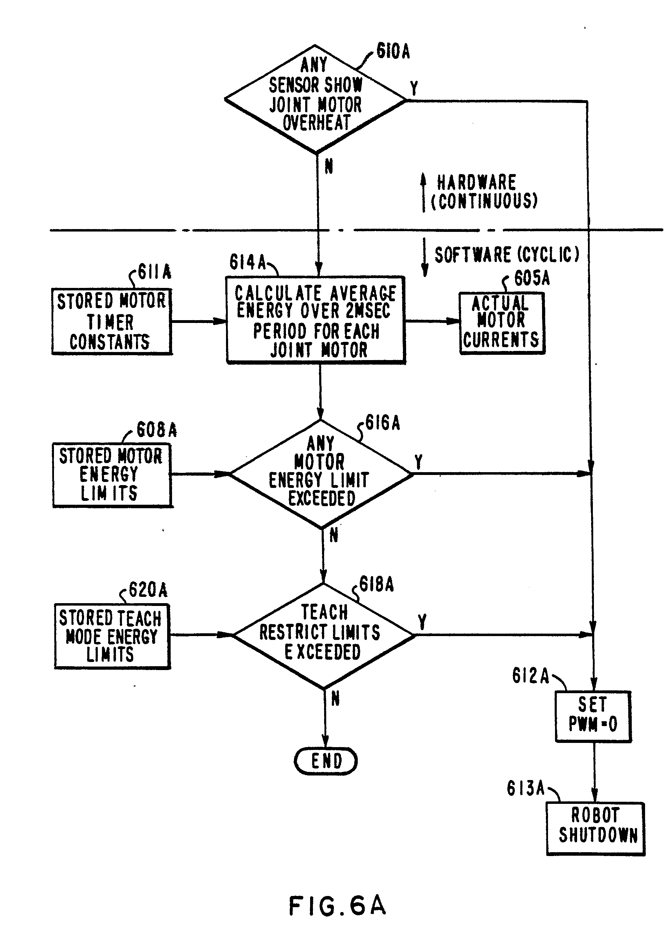

The logic associated with operation of the monitor and protection system is shown in Figure 6A. Box 610 detects whether the physical sensors indicate any of the joint motors is overheating. If so, block 612A sets PWM to zero and the robot is shut down as indicated by box 613A.

If no overheating is physically sensed or if overheating is present but not physically signaled, a backup logic path includes block 614A that calculates for each joint motor the average applied energy over each of successive two millisecond time periods. Block 616A compares the computed applied energy for each motor to the known energy limit based on motor capability (as specified for example by the manufacturer) for that motor which is stored for call-up as indicated by the block 608A.

If any joint motor energy limit is exceeded, block 612A shuts down the robot. If no motor energy limit is exceeded, block 618A next determines whether any special lower motor energy limit(s) have been exceeded, i.e., whether lower motor energy limits 620A applicable to the teach mode of robot operation have been exceeded. If so, the robot is shut down through the block 612A as previously described. If not, the monitor software execution is ended until it is repeated in the next cycle.

In making the motor energy calculation, the actual feedback current sample 605A for each motor is squared to produce a scalar proportional to the applied electrical power. To average the feedback current for each motor for a predetermined time period undergoing measurement, the power scalar is processed through a digital filter having a time constant 611A corresponding to the particular motor for which the calculation is being made. The filter output is the quantity that is compared to the stored motor energy limit.

The following algorithm is employed to provide motor energy checking as described:

## Energy Check Algorithm

The energy check calculates motor energy and alarms the SCM when energy exceeds a specified limit for a specified period of time.

1) Input:

current     CUR1 1 msec averaged current
energy limit     ELIMIT from SCM Board (constant)
time constant     TAU from SCM Board (constant)


Output:     alarm     ECODE to SCM Board


2) Principle:

```
                    i*i                 Energy
i------x---------1/(1+as)---------Threshold-------Alarm
|    |                 1st order filter
|  ---|


             i = current [A]
```

3) Algorithm:

```
temp = CUR1**2 - ENERGY
ZOENGY = ZOENGY + temp
ENERGY = ZOENGY / 2**16 * TAU

if |ENERGY| > ELIMIT
then ECODE = OVENGY
```

4) Scaling:

i) condition of alarm output

if step input of i**2 = k*limit is applied, then output an alarm condition tx seconds after step is applied.


ii) equation

```
a = delt * 2**16/TAU
TAU = delt * 2**16/a
    = about 20 to 40 for delt = 4 msec
```


## VELOCITY MONITORING AND PROTECTION SYSTEM

As shown in Fiugre 5B, the robot protection system further includes a velocity monitoring and protection system 600B which provides a backup check on velocity control operation and, for safety and property protection reasons, initiates safeguarding action if a failure occurs. The backup velocity system 600B is centered about the torque processor (TP) board 600.

At the next higher control level, the SCM board 400 employs system motion software to develop position commands for each robot axis. With the use of these two core boards and the AIF board, the robot control is in its basic control configuration.

Position and velocity control circuitry on the SCM board 400 operate on the position commands to generate torque commands for the torque control on the TP board 600. In turn, the TP board 600 generates voltage commands for each joint motor.

The voltage commands are applied to a pulse width modulator (PWM) on the AIF board 800. The PWM in turn operates the power switches for the various joint motors to move the joints coordinately so that the robot tool tip goes to the commanded positions.

Position/velocity feedback 602B is coupled from the robot to the AIF board 800. In the case of UNIMATION 860 robots, the velocity feedback is in the form of tachometer signals. For UNIMATION PUMA robots, the feedback is in the form of position encoder signals that are processed by circuitry on the AIF board 800 to produce velocity feedback signals.

Motor current feedback is sensed in the power switch circuitry and coupled to the AIF board 800 as indicated by the reference character 604B.

Backup velocity monitor software 606B is employed to compute accurately an estimate of the actual velocity of each joint motor on the basis of the motor back-emf, i.e., from the motor terminal voltage, the known motor resistance and inductance, and the sensed motor current. The resultant computed velocity is thus determined independently of the tachometer or encoder sensed velocity and serves as a backup velocity check.

The velocity monitor software 606B is partitioned in this case between microprocessors on the SCM board 400 and the TP board 600. Thus, the back-emf velocity calculation is made on the TP board 600 and processing of the velocity calculation for checking and protective action is performed on the SCM board 600.

As shown, actual motor current feedback is derived from the AIF board 800. Voltage commands from the TP board 600 are employed as the motor terminal voltages in the software calculations.

## BACKUP VELOCITY MONITOR AND PROTECTION SOFTWARE

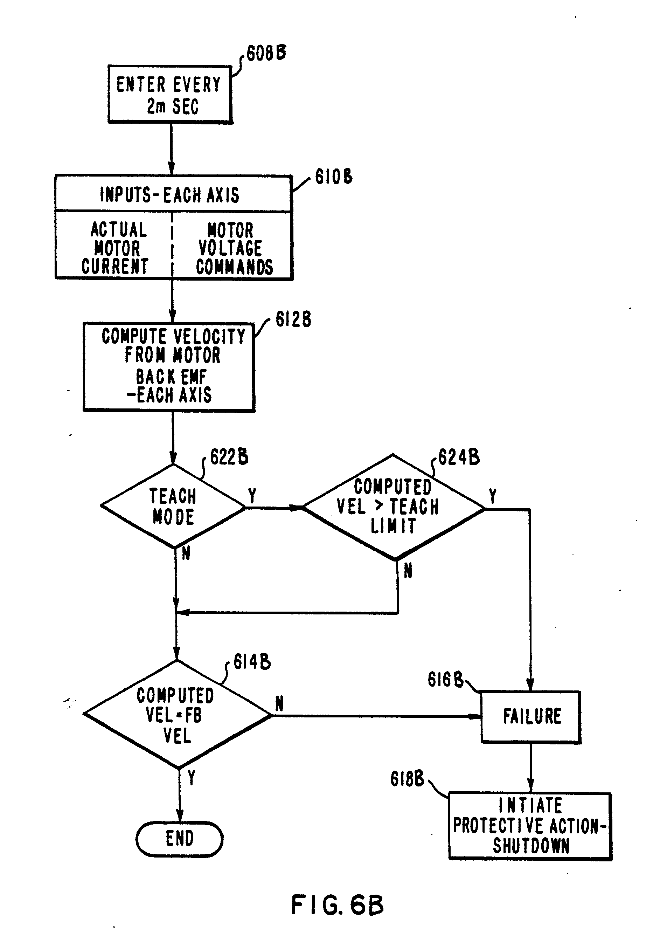

The velocity monitor and protection programming is shown in a flow chart in Figure 6B. Thus, a velocity calculation routine is executed every 2 milliseconds as indicated by the reference character 608B. Inputs needed for the back-emf velocity calculation are obtained in block 610B and the velocity is calculated for each joint motor in box 612B. The feedback motor current and voltage command values employed in the calculation are average values for the preceding two milliseconds.

The following formula is employed in the calculation:

$$VEL = w^*Ke = Vin - (L^*di/dt + iR)$$

where:

R = motor resistant [ohm]
L = motor inductance [H]
Vin = motor terminal voltage [V]
Ke = motor Back-emf constant [V/rad/sec]
w = motor velocity [rad/sec]
i = motor current [A]

Algorithm: $VEL(n) = [PWMout^*2^{**}9 - MOTL^* i(n)-i(n-1) -i(n)^*MOTR]/2^{**}16$

where:

i(n) is A/D value shifted right 6 bits and accumulated 1 mesc/Ts times (running 1 msec average).
Ts is PWM sample rate = 250 micro sec

Scaling of L, R:

i) equations:

$$MOTR = 2^{**}13 * Imax/Vmax * R(ohm)$$
$$MOTL = 2^{**}13 * Imax/Vmax * 1/delt * L(H)$$
$$SV = 2^{**}-8 * Vmax$$

where Krpm = (SV/KE) * VEL

ii) example: Vmax = 300V, Imax = 20A, R = 0.49 ohm, L = 5.5 mh,

KE = 120V/Krpm, delt = 4 msec
MOTR = 268, MOTL 751
Krpm = 9.76 * 10^{**}-3 * VEL

```
     Vin            PWMout           VEL              VELemf
     V              bits             bits                bits
     -----Kpwm------------2**-9---+--------2**-16*SV-----1/KE---
                                  |
                                  |        Iin                    |
     A                            |      Kpwm = Vmax/2**15
     -----Kad--2***2-6)--MOTR-    |      Kad  = 2**15/Imax
                      --MOTL-     |
```

At this point, the calculated velocity is transferred to the SCM board 400 where a microprocessor called the servo manager executes block 614B to compare the back-emf computed velocity with the feedback velocity 602B. If a difference exists and if the difference exceeds a predetermined tolerance value, block 616B registers a failure and block 618B initiates protective action, i.e., robot shutdown.

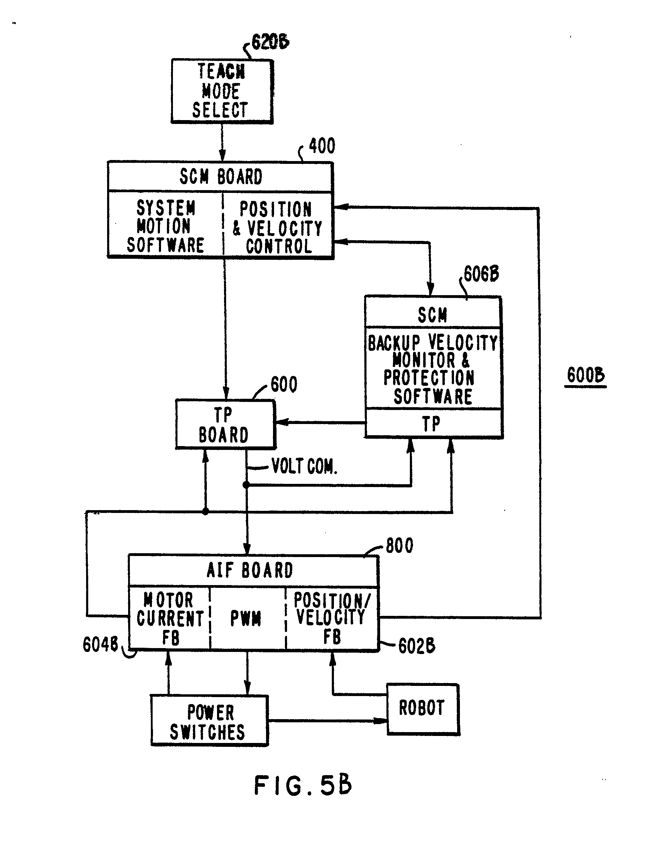

In the special use case where the robot is being operated in the teach mode as a result of an operator selection through selector 630B. (Figure 5B), a special low velocity limit is applied to the velocity controller to provide extra safety. In that event, software block 622B detects the teach mode and block 624B compares the back-emf computed velocity to the teach mode velocity limit and if it exceeds that limit, block 616B registers a failure and block 618B initiates protective shutdown action. If the computed velocity is within the teach mode limit, program execution proceeds to the block 614B for velocity feedback monitoring as previously described.

## FURTHER DESCRIPTION OF BOARD IMPLEMENTATION CIRCUITRY SERVO CONTROL BOARD

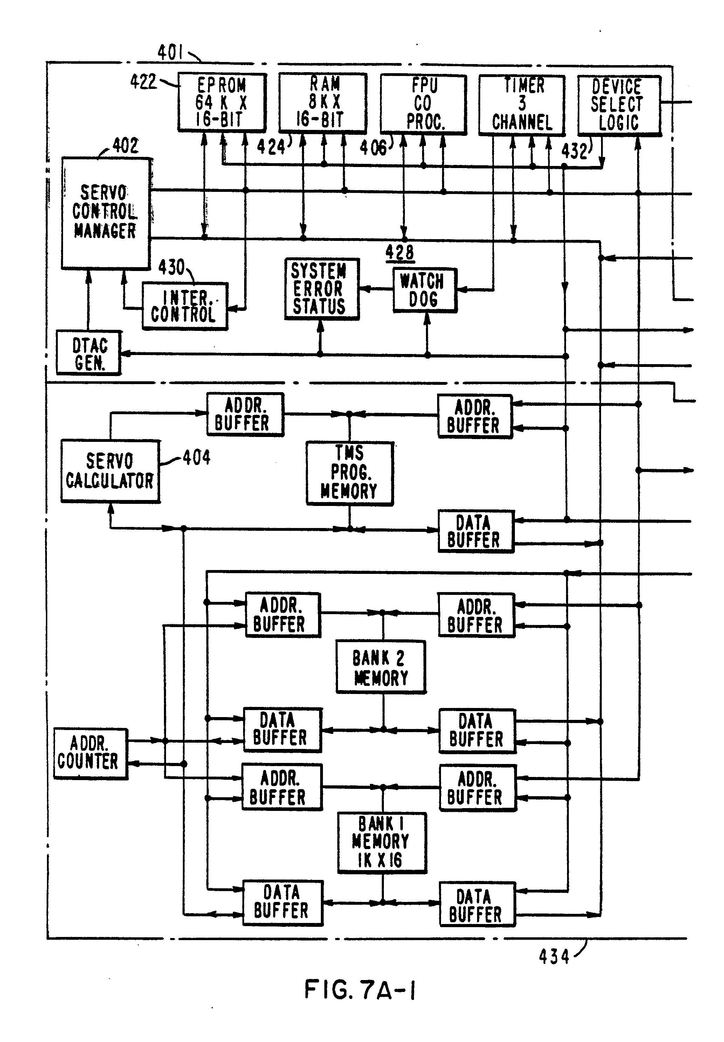

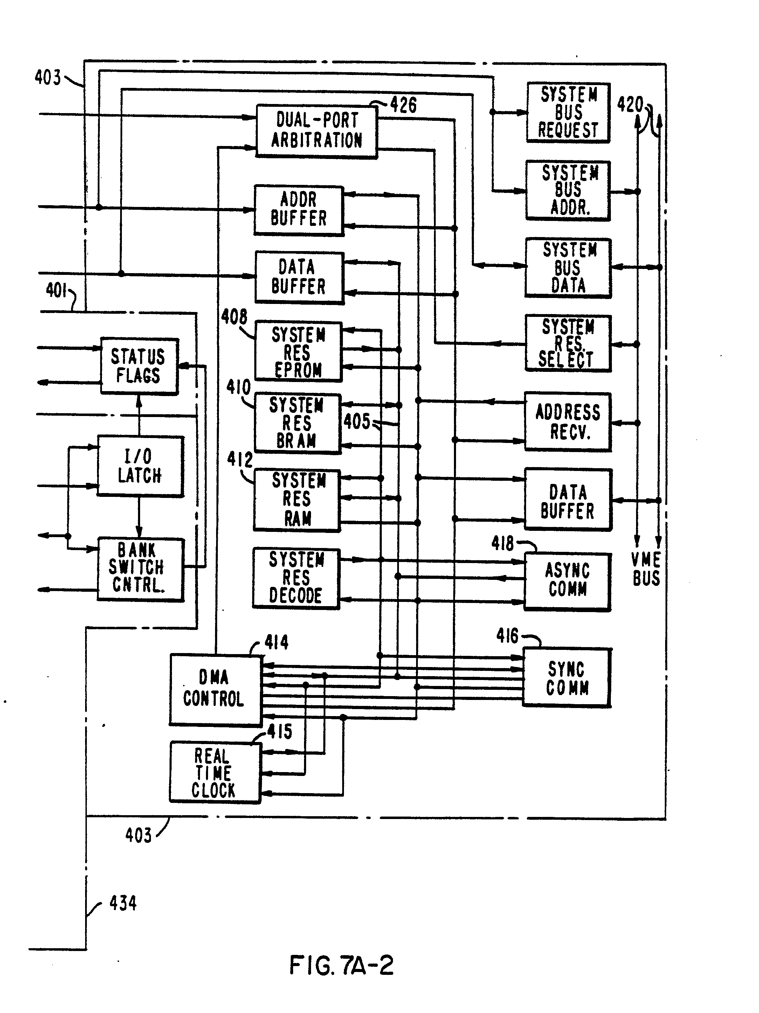

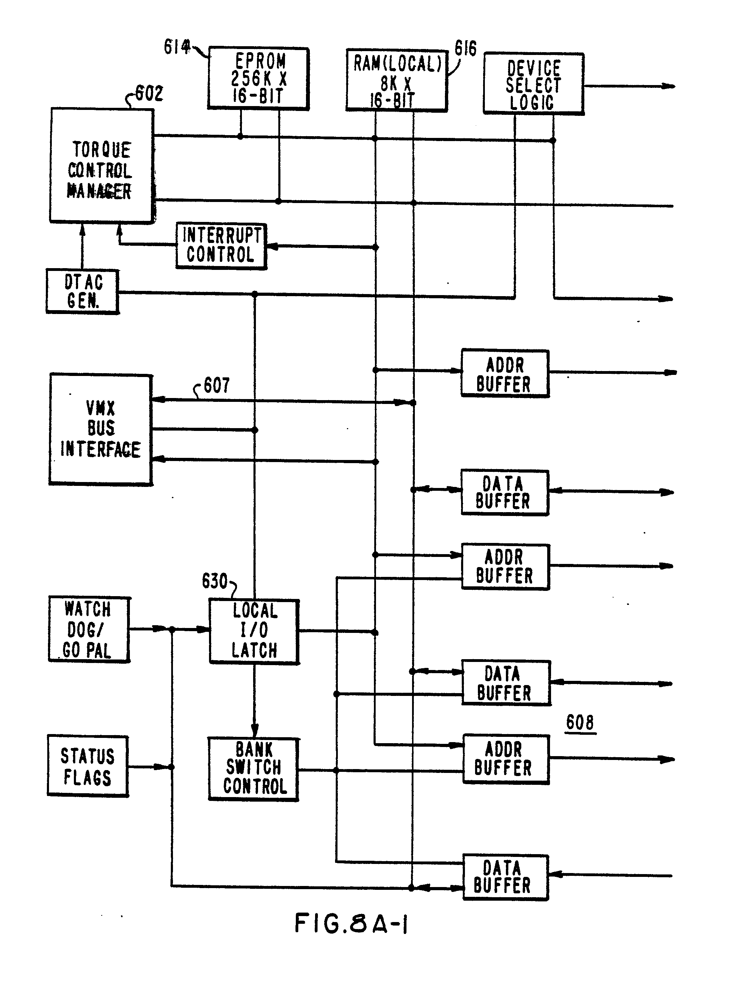

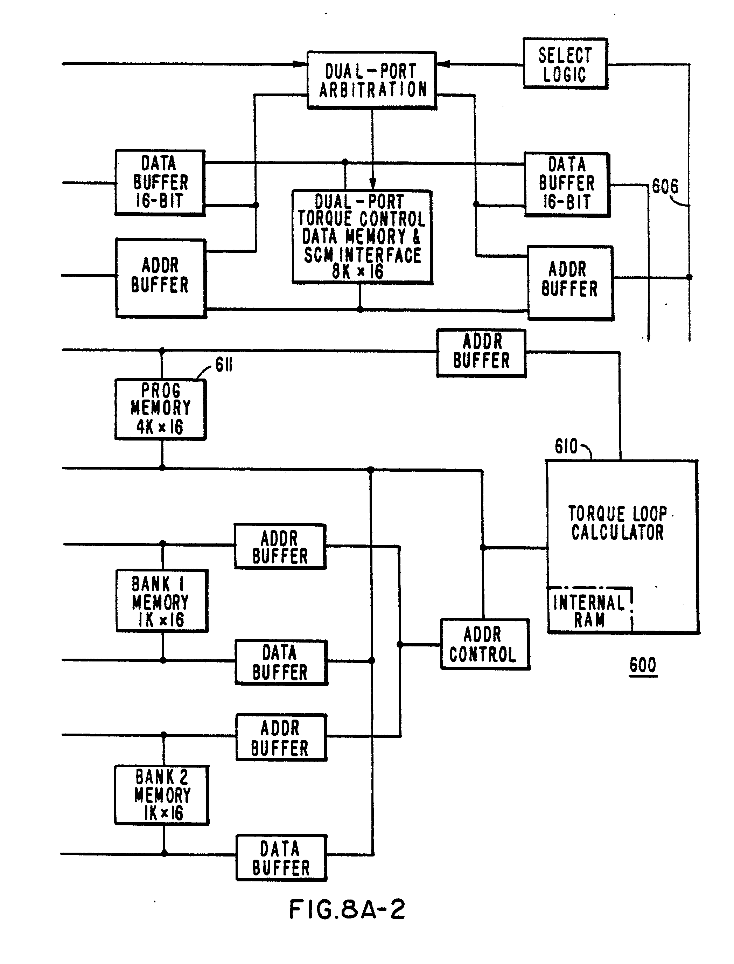

A servo control module (SCM) or board 400 (Figure 7A1-2) is structured in accordance with the modular architecture of the robot control system to operate as a core board for a complete basic robot control and generate arm solutions from stored robot program commands or to operate as part of an expanded robot control and receive for implementation arm solutions produced from robot program commands by the higher level system control board 350. The generation of arm solutions involves the execution of robot control functions including robot program language interpretation, path planning, trajectory calculations (intermediate position commands and axis coordination) and transformation of position information between Cartesian and robot joint and robot tool coordinate systems. The SCM board 400 additionally provides communications interfacing with related peripherals and a host controller if provided.

The SCM board 400 is provided with program controlled digital circuitry to implement arm motion control loops for the robot control system. Motion control is achieved for each axis through a control loop arrangement which preferably includes interrelated position, velocity, and acceleration control loops from which torque commands are developed for implementation by the torque processor module 600. The digital servo control is a coordinated multiprocessor servo control that generates output torque commands from (1) position and velocity commands provided for each axis by the arm solution and (2) position and velocity feedback signals obtained from the position encoders and the tachometers through the arm interface module 800.

In the SCM control loop operation, a position error is calculated for each axis from the applied axis position command and the axis position feedback. A velocity error is calculated for each axis from a velocity command derived from successive position commands and from the axis velocity feedback. Preferably, the position and velocity control loops are operated in parallel, i.e., the position and velocity errors are summed to produce a torque command for the torque control loop on the torque control module 600. Additionally, an acceleration command preferably is derived from successive velocity commands and applied in a feedforward acceleration control loop which generates an acceleration based torque command for summa tion with the position and velocity errors in generating the SCM output torque command.

The frequency with which loop calculations are made is selected to produce robot arm motion which is fast, accurate, smooth and stable. For example, the frequency employed can be such as to provide a trajectory cycle of 32 milliseconds as in the present case. If desired, a faster trajectory cycle, i.e., as short as 8 milliseconds, can be achieved.


SCM DIGITAL CIRCUITRY

As observed in Figures 7A1-2, the SCM board 400 generally comprises two sections, i.e., a local processor section 401 and a system resource section 403. The system resource section 403 employs a bus 405 and provides functions related to the overall robot control system and not specifically related to execution of the position and velocity control loops.

These functions include EPROM for storage of the robot arm solutions, battery backed-up RAM for storage of non-volatile data, static RAM, real-time clock, a DMA controller and two multi-protocol, dual channel communications controllers.

The system resource area is implemented as dual-port memory. As such, equal access to the system resource section is provided from either a local processor or from the VME bus. The system resource functions appear as a bus slave to the VME bus. This provides the capability for these related functions to be controlled either from the SCM local processor, or from an optional processor connected to the system bus.

In the local processor section 401, the SCM digital circuitry includes coordinated digital coprocessors and interface and resource circuitry needed for specified performance, i.e., to provide control calculations and control data management needed for accurate and efficient control of all axes and to provide interfacing communication with a host controller, peripheral devices and other robot controllers. Preferably, a servo control manager 402 operates with a servo calculator 404 which functions as a slave processor principally to make position and velocity control loop calculations (i.e., feedback filters, loop gains, position and velocity errors, etc.).

The servo control manager 402 directs control, status and program data to and from the SCM board 400 and to and from the servo position/velocity control calculator 404. The servo control manager 402 can be a Motorola 68000 which has a high data processing capability. By separating data management and control calculation tasks in accordance with the respective capabilities of the processors 402 and 404, a basic circuit organization is provided as a basis for achieving substantially improved control performance with manufacturing and user economy.

In the illustrated embodiment, implementation of the local processor section of the SCM board 400 is based on usage of a 68000 processor as the servo control manager 402 and two coprocessors. Both coprocessors serve as peripheral devices to the 68000. One of the coprocessors 406 (preferably National Semiconductor 32081), provides floating-point calculation capability when arm solutions are to be provided by the SCM board 400. The other coprocessor, or slave processor, is the position/velocity servo calculator 404 and is implemented with a Texas Instruments TMS-32010 Digital Signal Processor. The position/velocity processor provides high speed fixed point calculation capability.

The remaining functions which are a part of the local processor section include local memory, both EPROM and RAM, a peripheral timer/counter device, interrupt control, and system error monitoring devices. The local processor 402 can serve as a master to the VME bus for access to the TPM or other related type functions. However, the SCM board 400 does not provide VME bus system controller type functions which normally include system reset generation, bus arbitration for access to the bus and system bus clock generation, since these functions are implemented on the arm interface board 800.

In the interface between the servo control manager 402 and the servo calculator 404, a special dual port memory organization, referred to as "ping-pong" or "bank switched" memory allows either processor to communicate with the other without impacting the processing performance of either processor.

## PROGRAMMED OPERATION OF SERVO CONTROL BOARD

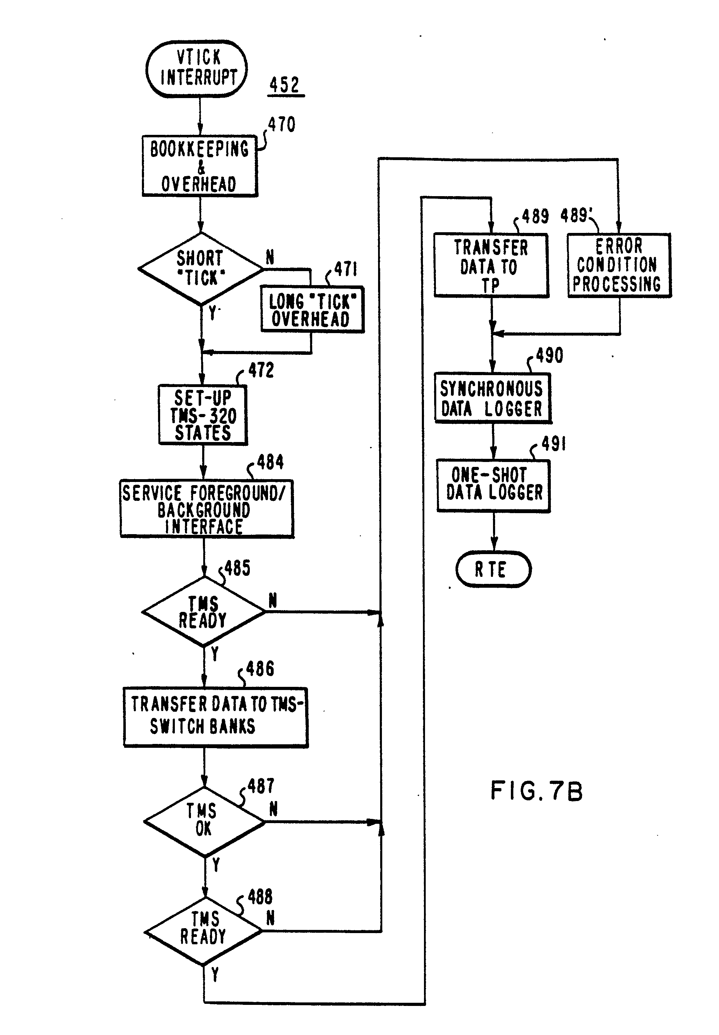

As schematically shown in Figures 7B-7E, the program system for the servo control data manager 402 comprises a background program 450 called MAIN and a cyclically operated foreground interrupt routine 452 called SERVO. When the system is started as indicated to RESET, an initialization routine 453 is executed prior to continuous running of the MAIN program 450. In addition to the cyclically executed SERVO interrupt 452, an interrupt routine 454 called C&UNEX operates in the foreground on demand to process unscheduled or unexpected interrupts. Further, a special highest priority routine 457 called the watch dog timer interrupt functions in response to operation of the external watch dog hardware.

Where the robot control system includes the system control board 350 for higher performance through higher computing capacity, the MAIN program provides for receiving and distributing position commands from the system control board 350. In the minimum or basic robot control system configuration, the system control board 350 is not included and the MAIN program 450 further performs arm solutions to generate position commands locally on the servo control board 400.

The rate at which the MAIN program 450 is interrupted for the cyclical execution of the SERVO routine 452 is controlled by the signal VTICK generated once each millisecond on the VME bus 155 from the arm interface board 800. The basic functions provided by the SERVO routine 452 are:

1) transfer control data to and from the servo calculator 404;
2) transfer control data to and from the torque processor board 600;
3) receive sensor feedback data over the VME bus 155 from the arm interface board 800;
4) interface to the supporting background task RDMASC;
5) perform synchronous data logging;
6) perform one shot data logging;
7) place broadcast data in a blackboard storage area;
8) shut the system down if serious error conditions occur.

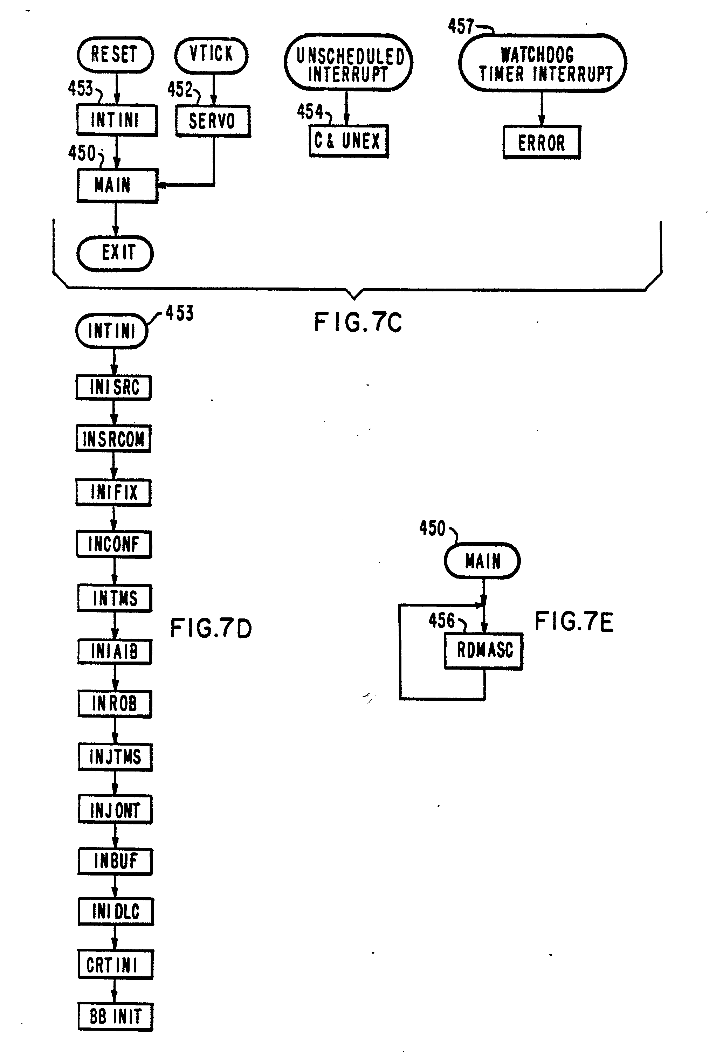

The initialization routine is shown in greater detail in Figure 7C. The process essentially comprises the performance of a series of tasks as indicated by the successive blocks. The following list provides further information on the nature of these tasks:

| TASK | INITIALIZATION |
|---|---|
| INISRC | bit-bus emulator for handshake |
| INSCROM | feedback interface |
| INIFIX | global variables |
| | |
| INCONF | robot default configuration |
| INTMS | servo calculator-download program store |
| INIAIB | torque processor board 600 |
| INROB | robot software configuration |
| INJTMS | bank switch memory |
| INJONT | joint data structure via servo calculator program memory and torque processor board shared RAM reads |
| INBUF | internal buffer management areas |
| INIDLC | one shot and synchronous data logger interface |
| CRTINI | input/output hardware-servo control board 400 |
| BBINIT | bit-bus emulator interface and handshake with system control board 350 |

Once the system is initialized, the MAIN program 450 (Figure 7D) begins continuous cyclical background execution. As shown in Figure 7E, a routine 456 called RDMASC is run to provide ongoing reading of system position commands from the bit-bus emulator which is a designated memory area in shared RAM where system commands are deposited when received from the system control board 350.

Viewed as a whole, the background and interrupt routine can take on the following finite servo states:

0 - Start-up state
1 - Initializing state
2 - Calibrating state
3 - Servo disabled state
4 - Servo enabled, hold state
5 - Servo enabled, moving state The background task is responsible for assuring that valid state transitions occur, and for sequencing the interrupt task to new states. The interrupt task is therefore written to accept "commanded" states and to supply "current" states. In addition, the background task is sequenced via commands from the bit-bus emulator. The following state transition table defines this operation:

| Current State | Command ID from bit-bus | | | | | | | | | |
|---|---|---|---|---|---|---|---|---|---|---|
| | 36 | 17 | 45 | 1 | 16 | 34 | 20 | 2 | 18 | 46 |
| 1 | -1 | -1 | -1 | -1 | -1 | 2 | -1 | -1 | -1 | -1 |
| 2 | -1 | 3 | -1 | -1 | -1 | 2 | -1 | -1 | -1 | -1 |
| 3 | 3 | 3 | 3 | 4 | -1 | -1 | -1 | 3 | -1 | 3 |
| 4 | 4 | -1 | -1 | 3 | -1 | -1 | 5 | 4 | 4 | 4 |
| 5 | -1 | -1 | -1 | 3 | 4 | -1 | 5 | -1 | -1 | -1 |

Where a "-1" indicates an illegal state transition. The bit-bus commands are defined as follows:

36 - Where command
17 - Calibrate command
45 - Install servo parameters command
1 - Enable/disable servos command
16 - Hold command
34 - Initialize command
20 - Normal motion command
2 - Brake command
18 - Limp command
46 - Upload current servo parameters command

Generally, a set of position commands is generated for the servo loops once each Valcycle, in this case once every 32 milliseconds. In turn, each Valcycle is measured by Vticks which are generated on the VME bus once every millisecond. There are thirty-two (32) Vticks in each VALCYCLE in this case.

A cycle counter named TCKCNTR counts the Vticks in each VALCYCLE. A running counter called UNICNTR keeps a summing count on Vticks up to $2^{31}$ ticks.

When the next previous VALCYCLE has been ended as indicated by the UNICNTR in block 457, block 458 operates on the beginning of the new VALCYCLE when TCKCNTR = 1 to initiate reception of the new set of position commands for the new VALCYCLE. Thus, block 459 reads the new commands from the bit-bus emulator.

If the command includes an emergency command (such as disable servo), block 460 directs the emergency command to an emergency command buffer. Block 461 sends motion (position) commands to a motion command buffer. Similarly, block 462 sends the non-motion commands to a non-motion command buffer.

The blocks 460, 461 and 462 perform like basic functions. First, the command is read from the bit-bus emulator in shared RAM. Next, prescribed checks are made to validate the command. Finally, the command is routed to the designated buffer in local non-shared internal RAM.

If no direction is found to transfer a system command to an internal RAM buffer, block 463 records a no command error and prepares an alternate command (same as last command or a shutdown if this is the second occurrence of this no command error).

Next, blocks 464 and 465 send a response to the system control board 350 that the newest command has been received when the value of the tick counter nears the end of the current VALCYCLE, i.e., when it equals the VALCYC minus three. Block 466 next repeatedly polls UNICNTR until RDMASC is to be re-executed to receive the next system command.

When a VTICK occurs (i.e., once every millisecond), RDMASC is temporarily interrupted for execution of the SERVO routine 452. As shown in the flowchart, the SERVO routine 452 first performs needed bookkeeping and overhead tasks as indicated in block 470. For example, the watchdog timer is reset for the 2 millisecond interrupt. If the tick is a long tick, i.e., the tick counter equals one to mark the start of a new VALCYCLE, block 471 performs certain additional overhead tasks. The basic functions performed are: reset tick counter to 1; route the new position command from the system control board to the servo calculator; and process changes of state in the SERVO routine.

## LOADING DATA FOR SWITCHING TO THE SERVO CALCULATOR

If the tick is a short tick, i.e., an intermediate tick in the 32 tick cycle, or after long tick overhead has been performed, block 472 prepares for transferring data to the servo calculator by loading data to the back switched memory according to the state in which the servo calculator is to be.

The flowchart in Figure 7F shows the servo calculator setup in greater detail. If block 473 finds the calculator is to be in the start-up state, block 474 fetches data needed for start-up logic for downloading to the servo calculator 404. For the initialization state, blocks 475 and 476 fetch initialization command data for downloading to the servo calculator 404. Similarly, calibration command data is readied for the servo calculator 404 by blocks 477 and 478 for the calculator calibration state.

If the calculator is to be disabled, blocks 479 and 480 load into the bank switched memory a disabled command. Finally, if the calculator state is to be hold or moving, which covers most of the operating line, blocks 481 and 482 load motion command data into the bank switched memory. If none of the listed states are detected, block 483 records an error.

## SWITCHING DATA TO THE SERVO CALCULATOR

After completion of the setup subroutine 472, block 484 performs whatever data transfer service is needed for the foreground/background interface within the servo control data manager 402.

In the servo calculator, two basic functions are performed. First, downloaded position command data is interpolated for each of the 31 ticks between long ticks in the VALCYCLE, and velocity and acceleration command data are computed from the position command data for each tick. Next, servo calculations are made for each axis after each tick for the position, velocity and acceleration commands then applicable and the concurrently received position and velocity feedback. As a result, a torque command is computed for each axis after every tick for execution by the torque processor board.

## TORQUE PROCESSOR BOARD CONCEPTS

The torque processor (TP) board 600 provides a functional interface to the robot joint drive motors. Functionally, the TP board 800 implements the lowest level of control in the hierarchical control system, providing closed loop servo torque control for six robot axes. Physically, the TP board 600 electrically interfaces the robot path planning control system and the servo control (SCM) board with the arm interface (AIF) board 800, which in turn interfaces to the robot joint drive motors. The primary function of the TP board 600 is to regulate robot joint motor currents to commanded values by generating motor winding voltage commands which are executed using a pulse width modulation scheme on the AIF board.

The TP board 600 interfaces at one level to the SCM board, accepts from the SCM board torque commands and servo parameters for six axes and returns status data. The TP board 600 interfaces at a second lower level to the AIF board 800 providing servo voltage commands for the six robot axes. The AIF board 800 receives drive motor current, position and velocity feedback for closed loop control on the SCM and TP boards.

The TP board 600 employs the paired microprocessor to provide a number of features including the following:

1. Torque loop control for six axes (250 micro sec per 6 axes) for brush and brushless motors;
2. Software adjustable current offset eliminates potentiometers;
3. Downloadable gains - arm dependent parameters can be downloaded from the SCM board;
4. PWM compensation;
5. Commutation compensation;
6. Current averaging for data logging and other purposes;
7. Current limit check for safety;
8. Velocity monitoring (back emf) for safety check;
9. Energy check (IIT) to test stall condition;
10. Power-up self diagnostics; and
11. Downloadable diagnostics system.


## TORQUE PROCESSOR BOARD

More advanced robot performance is produced by digitally controlling the torque applied at the arm workpoint when the arm is in motion to control the arm workpoint position in accordance with a command trajectory. Axis drive forces are adjusted in accordance with actually experienced workpiece loading to satisfy position and trajectory commands with greater speed, accuracy and efficiency. Reference is made to W.E. 53,376 for a related invention directed to the control of torque as an end controlled variable.

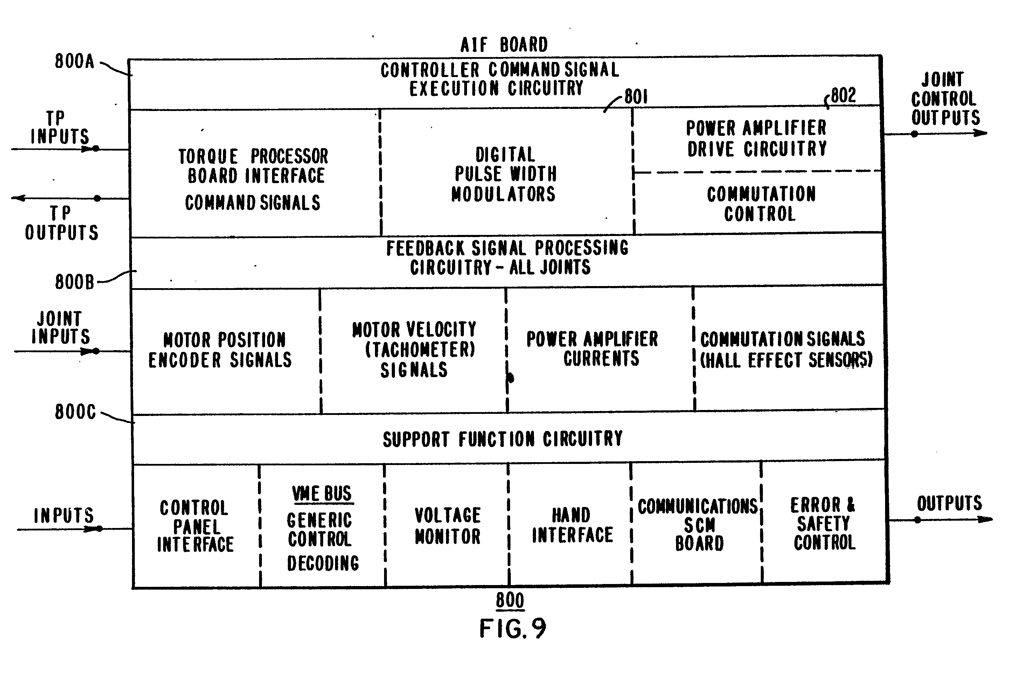

The torque control is embodied on a generic control circuit board 600 (Figures 4 and 8A1-2) called a torque processor (TP) board i.e., an electronic board usable to provide torque control for a wide variety of robots having different load capacities, different types of drives, different numbers of axes, etc.

The torque processor board 600 employs digital circuitry to generate voltage commands for each joint motor or axis drive on the basis of torque commands obtained from a higher control level (SCM board) and feedback currents obtained through the arm interface (AIF) board 800 from the axis drives. Thus, the torque control loops for all of the joint motors are closed through the TP board circuitry.

In the case of electric drives, the feedback current is the motor winding current which is proportional to actual motor torque. For hydraulic drives, the feedback current is also proportional to actual motor torque.

The digital torque control circuitry is preferably structured with multiple digital processors so that needed control computation and control support functions can be achieved for all axes accurately and efficiently within sampling frequency requirements.

In particular, a torque control manager 602 interfaces with a dual port SCM interface memory 604 for the exchange of stored torque control data between the SCM (servo control module) and the TP (torque processor) control levels. Axis torque commands and control loop parameters are downloaded from the SCM to the TP interface memory 604 through a data bus 606 preferably of the VME type. In return, status data is uploaded to the servo control level (SCM). The memory interface 604 between the TP and SCM boards is a dual port shared memory scheme which serves as a slave to the VME bus 606. Other board memories include a ping-pong memory 608, program EPROM, local RAM, and TP calculator memory.

The torque control manager 602 also directs the flow of current feedback from circuitry on the AIF board 800 at the next lower control level to the torque processor board 600 for torque control loop operation. Drive voltage commands resulting from torque control calculations are directed to the arm interface (AIF) board 800 by the torque control manager 602. The ping-pong (bank switched) memory 608 operates under the control of handshake flags to store command, feedback, and status data so that it is available when needed for torque control calculations or for higher control level reporting requirements or for axis drive control.

A coprocessor 610 provided in the form of a digital signal processor operates as a torque loop calculator which receives torque commands and feedback currents from the torque control manager 602 through the ping-pong memory 608, calculates drive voltage commands for the various robot axes from the torque errors computed from the torque commands and feedback currents, and transfers the drive voltage commands through the ping-pong memory 608 to the arm interface circuitry on command from the torque control manager 602.

With the described digital circuit structure, all needed torque control functions are able to be performed rapidly (250 microsecond sampling rate or better) and accurately within frequency bandwidth requirements.

Specifically, the rapid calculating capability of the digital signal processor 610 is employed for the torque control calculations as the data organizing and directing capability of the torque control manager 602 is employed for most other functions thereby enabling highly improved control performance to be achieved efficiently and economically.

The torque control manager 602 has an architecture well suited for the tasks described for data management but which has a calculating speed (i.e., over 4 microseconds for a $16 \times 16$ bit multiplication) too limited to meet torque control bandwidth requirements. The digital signal processor 610 has an architecture set for Z transform calculations (i.e., a calculating speed of 200 nanoseconds for a $16 \times 16$ bit multiplication) but which is otherwise generally unsuitable for the kinds of tasks assigned to the data manager processor 602. These two microprocessors function together as a unit or, in other terms, as a servo engine.

## TORQUE CONTROL PROGRAMMING

The torque processor board 600 is operated under the control of programs executed in the on board processors 602 and 610 to implement torque command signals from the higher SCM control level.

The torque processor software generally performs the following tasks which are partitioned as indicated:

### Torque Control Manager 602

Communication wit SCM
Command handling
Current sampling, conversation and offset adjustment
Commutation switch flag (state reading)
Ping-pong memory management
PWM chip management
Diagnostics
Error reporting

### Torque Loop Calculator 610 (program cycling based on 250 microsecond interrupt)

Overcurrent check - absolute and average
Torque loop calculations
Current averaging
PWM compensation
Commutation compensation
Back emf check - monitors velocity for safety
Energy check - tests for stall conditions

## ARM DRIVE CONTROL

As previously described, the higher level control looping generates voltage command signals to be executed through the AIF board 800 for the arm axes so that the arm effector is moved to commanded positions under controlled velocity, acceleration and torque in accordance with a user's robot or application program. Pulse width modula tion circuitry 801 and drive circuitry 802 are provided on the AIF board 800 to develop axis drive signals, in this instance for application to power amplifiers which provide the drive currents to DC brushless electric motors respectively associated with the six axes of arm motion.

The AIF board circuitry processes the voltage command data to develop digital TTL logic level signals to control the base or gate drive circuitry of the power amplifiers which supply the motor drive currents to the axis motors. As previously indicated, the motor currents and axis position and velocity data are fed back through the AIF board 800 to the higher level control loops for closed loop position, velocity and torque control.

## AIF BOARD - PULSE WIDTH MODULATION SCHEME

The pulse width modulation circuitry 801 on the AIF board 800 provides a digital interface for closing the torque or current control loop through the axis motor drive circuitry. The pulse width modulation concept is applied to control the conduction time width for the joint motor power switches and thereby satisfying motor voltage and torque commands.

As shown in the generalized block diagram of Figure 9, a digital PWM generator 825A receives 9 bit data commands and 3 register address bits the torque microprocessor P2 bus. Additionally, device select logic, read/write, reset (initialization) and data strobe signals are received from the P2 bus. A DTACK (acknowledge) signal is returned to the bus by the PWM generator 825A after each reception from the torque calculator on the torque processor board.

The digital PWM generator 825A is preferably arranged to service three axes where, for example, either brushless or brush type DC motors are employed as the axis drives. Thus, a set of digital signals (in this instance four such signals A1, A2, B1, B2) is generated for controlling the amplifier base or gate drive circuitry associated with each axis motor whether the motor is the brushless type or the DC brush type.

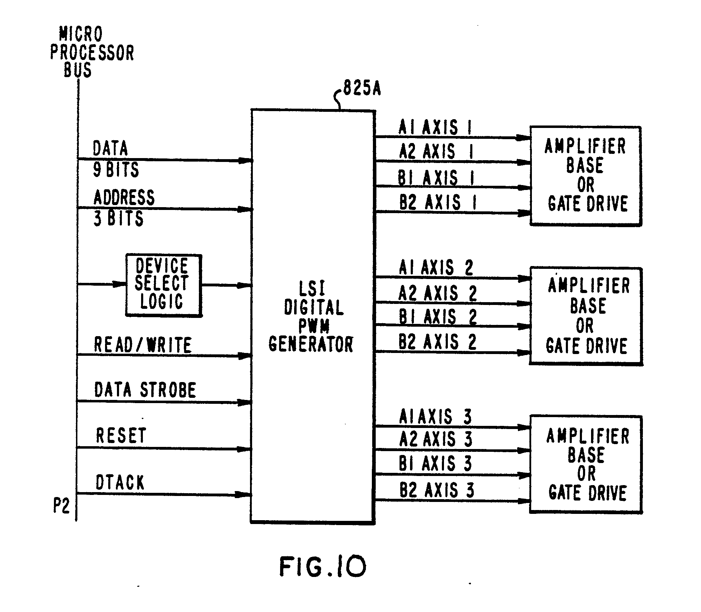

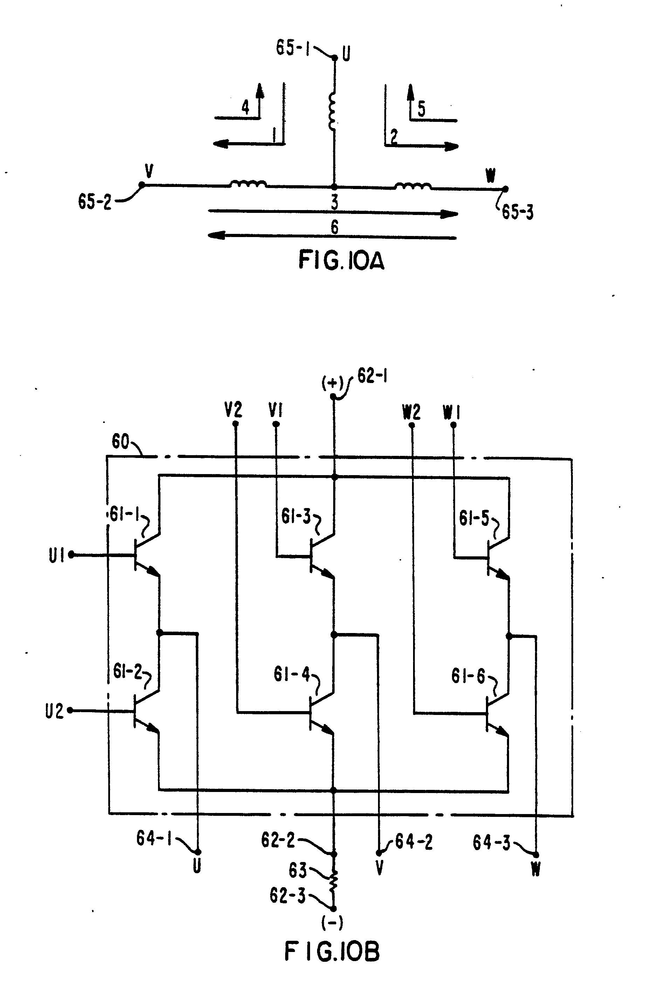

Four digital PWM control signals are employed to control the direction and magnitude of current flow through the motor windings through on/off power switch control. In the brushless DC motor embodiment, the three phase windings of the brushless DC motor are interconnected in a bridge circuit (Figure 10A-B) such that the motor drive current is always directed through a pair of windings and the motor conduction path is rotated or commutated through successive winding pairs to produce the motor drive torque. In this arrangement, the PWM pulses determine the time span of motor current flow and commutation switching logic based on the PWM pulses and Hall effect sensor feedback signals determine the winding pairs through which, and the direction in which, drive current is to flow.

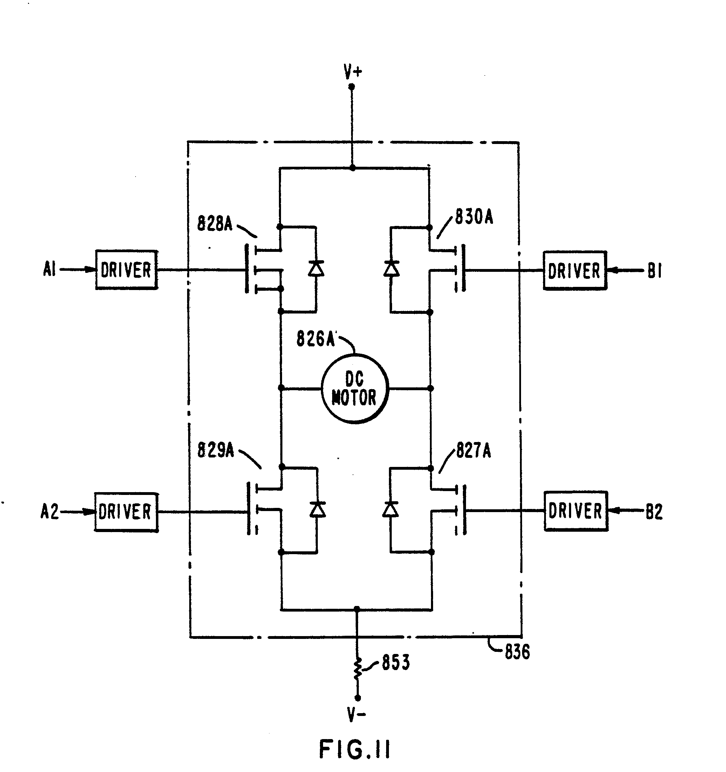

In the DC brush type embodiment where an H type power amplifier bridge circuit is employed, DC brush type motor 826A (Figure 11) is operated in one direction when power amplifier switches 827A and 828A are opened under control of PWM output signals A1 and B2, and it is operated in the opposite direction when power amplifier switches 829A and 830A are opened under control of PWM output signals B1 and A2.

The pulse width modulation circuitry is preferably embodied in a pair of large scale integrated pulse width modulation (PWM) chips. Generally, each PWM chip operates as a microprocessor peripheral device (i.e., under the control of a microprocessor higher in the control loop configuration) to provide digital pulse width modulated signal generation for control of three axes having DC brush type motor drives.

## Claims

1. A digital control for a robot having a plurality of arm joints; an electric motor for driving each of the robot arm joints; a power amplifier operable to supply drive current to each motor; each joint motor having digital feedback control loop means operable at a predetermined sampling rate and including digital position and velocity control loops driving a digital torque control loop in accordance with digital position commands to generate digital motor voltage commands for controlling the associated power amplifier; means for sensing the motion of each joint motor and for generating corresponding digital position and velocity feedback signals for control calculations in said position and velocity control loops; means for generating digital signals representative of the respective joint motor drive currents for control calculations in said torque control loop; and means for sensing motor temperature and for generating an overtemperature signal when a predetermined motor temperature is exceeded indicating excessive motor current flow; said robot control characterized with:

backup energy monitoring means independently determining the energy applied to each joint motor from the motor current;

means for comparing the backup calculated energy for each joint motor to a predetermined energy

16

limit for that motor and for generating an overlimit signal when that limit is exceeded; and

means for shutting down robot motor energization when said overtemperature or overlimit signal is generated.

2. A digital robot control as set forth in claim 1 wherein the motor energy limit is based on motor capability.

3. A digital robot control as set forth in claim 1 wherein the motor energy limit is less than the motor capability limit and is based on a predetermined use condition.

4. A digital robot control as set forth in claim 3 wherein the use condition is operating limitations specified for teach mode operation.

5. A digital robot control as set forth in claim 1 wherein said backup energy monitoring means generates a scalar proportional to the electrical power from the square of each current feedback sample, averages the power scalar values over a predetermined time period average values computed for a predetermined time period, and filters the averaged scalar to generate as an output said backup calculated energy for each motor.

6. A digital robot control as set forth in claim 1 wherein the following algorithm is employed in the backup energy calculation:

Algorithm:

```
temp = CUR1**2 - ENERGY
ZOENGY = ZOENGY temp
ENERGY = ZOENGY / 2**16 * TAU
```

if |ENERGY| > ELIMIT then ECODE = OVENGY.

7. A digital robot control as set forth in claim 1 wherein each of said motor torque control loops includes torque servo control means having microprocessor means for generating motor voltage commands from torque commands and motor current feedback signals;

another servo control means having another microprocessor means included in each of said motor velocity control loops and generating torque commands in response to position and velocity commands and position and velocity feedback signals; and

said torque microprocessor means including said backup energy monitoring means and said comparing means.

8. A digital robot control as set forth in claim 1 and being further characterized in that:

a power amplifier operable to supply drive current to each motor;

each joint motor having digital feedback control loop means operable at a predetermined sampling rate and including digital position and velocity control loops driving a digital torque control loop in accordance with digital position commands to generate digital motor voltage commands for controlling the associated power amplifier;

said motion sensing and signal generating means generates position and primary velocity feedback signals for control calculations in said position and velocity control loops;

backup velocity monitoring means independently determine the velocity of each joint motor from the motor current and terminal voltage and the motor inductance and resistance; and

means are provided for comparing said primary and backup velocity signals for each joint motor.

9. A digital robot control as set forth in claim 1 wherein means are provided for shutting down the robot operation if the difference between the primary and backup voltages for any joint motor exceeds a predetermined limit.

10. A digital robot control as set forth in claim 8 wherein the motor current and voltage values are average values computed for a predetermined time period next preceding the current control cycle.

11. A digital robot control as set forth in claim 8 wherein the following formula is employed in the backup velocity calculation:

$$VEL = w*Ke = Vin - (L*di/dt\ iR)$$

where:

R = motor resistant    [ohm]

L = motor inductance    [H]

Vin = motor terminal voltage    [V]

17

Ke = motor Back-emf constant    [V/rad/sec]

w = motor velocity    [rad/sec]

i = motor current    [A]

12. A digital robot control as set forth in claim 8 wherein each of said motor torque control loops includes torque servo control means having microprocessor means for generating motor voltage commands from torque commands and motor current feedback signals; and

another servo control means having another microprocessor means included in each of said motor velocity control loops and generating torque commands in response to position and velocity commands and position and velocity feedback signals.

13. A digital robot control as set forth in claim 12 wherein said torque microprocessor means includes said backup velocity monitoring means and said other microprocessor means includes said comparing means.

14. A digital robot control as set forth in claim 13 wherein said other microprocessor means further includes means for shutting down the robot operation if the difference between the primary and backup voltages for any joint motor exceeds a predetermined limit.

20

FIG. 1

FIG. 2

FIG. 3

FIG. 4

FIG. 5A

FIG. 5B

FIG.6A

FIG. 6B

FIG. 7A-1

FIG. 7A-2

FIG. 8A-I

FIG.8A-2

FIG. 7B

FIG.7C

FIG.7D

FIG.7E

## AIF BOARD

| CONTROLLER COMMAND SIGNAL EXECUTION CIRCUITRY 801 | | 802 |
|---|---|---|
| TORQUE PROCESSOR BOARD INTERFACE COMMAND SIGNALS | DIGITAL PULSE WIDTH MODULATORS | POWER AMPLIFIER DRIVE CIRCUITRY |
| | | COMMUTATION CONTROL |

**FEEDBACK SIGNAL PROCESSING CIRCUITRY – ALL JOINTS**

| MOTOR POSITION ENCODER SIGNALS | MOTOR VELOCITY (TACHOMETER) SIGNALS | POWER AMPLIFIER CURRENTS | COMMUTATION SIGNALS (HALL EFFECT SENSORS) |
|---|---|---|---|

**SUPPORT FUNCTION CIRCUITRY**

| CONTROL PANEL INTERFACE | VME BUS GENERIC CONTROL DECODING | VOLTAGE MONITOR | HAND INTERFACE | COMMUNICATIONS SCM BOARD | ERROR & SAFETY CONTROL |
|---|---|---|---|---|---|

800A · 800B · 800C

TP INPUTS · TP OUTPUTS · JOINT INPUTS · INPUTS · OUTPUTS · JOINT CONTROL OUTPUTS

**800**

## FIG. 9

MICRO
PROCESSOR
BUS

825A

DATA
9 BITS
ADDRESS
3 BITS

DEVICE
SELECT
LOGIC

READ/WRITE

DATA STROBE

RESET

DTACK

P2

LSI
DIGITAL
PWM
GENERATOR

AI AXIS 1
A2 AXIS 1
BI AXIS 1
B2 AXIS 1

AMPLIFIER
BASE
OR
GATE DRIVE

AI AXIS 2
A2 AXIS 2
BI AXIS 2
B2 AXIS 2

AMPLIFIER
BASE
OR
GATE DRIVE

AI AXIS 3
A2 AXIS 3
BI AXIS 3
B2 AXIS 3

AMPLIFIER
BASE
OR
GATE DRIVE

FIG.IO

FIG.IOA

FIG.IOB

FIG.II